# EUROPÄISCHE PATENTSCHRIFT

(11) **EP 2 987 731 B1**
(45) Veröffentlichungstag und Bekanntmachung des Hinweises auf die Patenterteilung: **28.06.2017**
(21) Anmeldenummer: 14181652.0
(22) Anmeldetag: 20.08.2014
(51) Int. Cl.: B65B 3/02, B65B 57/14, B29C 49/12, B29C 49/58, B29C 49/78, B67C 3/26, B29L 31/00, B29C 49/06, B29C 49/46, B29C 49/48

(54) **Formfüllmaschine für einen Kunststoffbehälter**
Mould filling machine for a plastic container
Remplisseuse de moule pour un récipient en plastique

(43) Veröffentlichungstag der Anmeldung: 24.02.2016
(73) Patentinhaber: Krones AG, 93073 Neutraubling (DE)
(72) Erfinder: Engelhard, Patrick, 93073 Neutraubling (DE)
(74) Vertreter: Grünecker Patent- und Rechtsanwälte PartG mbB

(56) Entgegenhaltungen:
- EP-A1- 2 439 048
- EP-A2- 0 458 093
- WO-A1-2013/020885
- GB-A- 1 201 069
- US-A1- 2013 106 028
- US-A1- 2014 157 726

## Beschreibung

Die Erfindung betrifft eine Formfüllmaschine mit den Merkmalen des Oberbegriffs von Anspruch 1.

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Nachteilig dabei ist, dass gelegentlich unterschiedliche Produktmengen in die Behälter abgefüllt werden. Hier setzt die Erfindung an.

Die WO 2013/020885 A1 offenbart ein System, um einen Kunststoffbehälter gleichzeitig zu aufzublasen und zu befüllen.

Die US 2013/0106028 A1 offenbart eine Vorrichtung und ein Verfahren, bei denen ein Vorformling mit einer unter Druck stehenden Flüssigkeit in einen Kunststoffbehälter umgeformt wird.

Die GB 1 201 069 offenbart ein Abfüllverfahren und eine Vorrichtung, bei denen ein Vorformling mit einem sterilen Produkt in einen Behälter umgeformt wird.

Die US 2014/0157726 A1 offenbart eine Verfahren und eine Vorrichtung, um Behälter herzustellen, die mit einer flüssigen Substanz gefüllt werden.

Die EP 0 458 093 A2 offenbart ein Füllelement für Füllmaschinen mit einem Flüssigkeitsventil.

Aufgabe der vorliegenden Erfindung ist es, eine Formfüllmaschine bereitzustellen, mit der eine möglichst gleichbleibende Produktmenge in die Behälter abgefüllt werden kann.

Zur Lösung dieser Aufgabenstellung stellt die Erfindung eine Formfüllmaschine mit den Merkmalen des Anspruchs 1 bereit.

Vorteilhafte Ausführungsformen der Erfindung sind in den Unteransprüchen definiert.

Dadurch, dass die Formfüllmaschine die Messeinrichtung aufweist, kann die abgefüllte Produktmenge genau bestimmt und darüber das Füllorgan so geregelt werden, dass die gewünschte Sollmenge in den Behälter eingefüllt wird. Folglich wird immer die gleiche Menge an Produkt abgefüllt.

Die Formfüllmaschine kann in einer Getränkeverarbeitungsanlage angeordnet sein. Die Vorrichtung kann einem Vorratsbehälter für Vorformlinge, einem Rinser, einer Transporteinrichtung, einer Spritzgussmaschine zum Herstellen der Vorformlinge und/oder einem Ofen zum erwärmen der Vorformlinge nachgeordnet sein. Die Vorrichtung kann einer Transporteinrichtung, einem Verschließer und/oder einer Verpackungsmaschine vorgeordnet sein.

Der Kunststoffbehälter kann dafür vorgesehen sein, Getränke, Hygieneartikel, Pasten, chemische, biologische und/oder pharmazeutische Produkte aufzunehmen. Der Kunststoffbehälter kann eine Kunststoffflasche, eine Dose und/oder eine Tube sein. Bei dem Kunststoffbehälter kann es sich im Speziellen um einen PET-, HD-PE- oder PP-Behälter bzw. -Flasche handeln. Der Vorformling kann dazu vorgesehen sein, durch Umformung in der Hohlform in den Kunststoffbehälter expandiert zu werden.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Die Formfüllmaschine kann zum Transport von Kunststoffbehältern eine Transporteinrichtung umfassen. Die Transporteinrichtung kann ein Förderband oder Karussell sein. Das Karussell kann um eine vertikale Achse mittels eines Antriebs drehbar ausgebildet sein. "Vertikal" kann hier bedeuten, dass dies die Richtung ist, die auf den Erdmittelpunkt gerichtet ist. Die Transporteinrichtung kann Behälteraufnahmen zur Aufnahme der Kunststoffbehälter am Hals, am Behälterkörper und/oder Behälterboden umfassen. Ein Transportstern kann der Formfüllmaschine vor- und/oder nachgeordnet sein.

Die Formfüllmaschine kann wenigstens eine Behandlungsstation zum expandierenden Umformen des Vorformlings zum Kunststoffbehälter in der Hohlform und zum Abfüllen des Produkts in den Kunststoffbehälter in der Hohlform umfassen. Die Formfüllmaschine kann mehrere Behandlungsstationen umfassen, die insbesondere mit den Behälteraufnahmen der Transporteinrichtung korrespondieren. Dadurch können mit der Formfüllmaschine mehrere Kunststoffbehälter parallel hergestellt und befüllt werden. Jede Behandlungsstation kann eine Hohlform und einen Ventilkopf umfassen. Die Behandlungsstationen können mit einem Drehverteiler zur Verteilung des Formfluids, des Produkts, eines Gases, eines Unter- und/oder Überdrucks verbunden sein. Die Behandlungsstationen können derart ausgebildet sein, dass die Vorformlinge in die Hohlform eingebracht, mit der Reckstange gestreckt, mit einem Formfluid zum Kunststoffbehälter ausgeformt, das Formfluid wieder abgesaugt und das Produkt abgefüllt wird. Das Formfluid kann Wasser oder eine geeignete inkompressible Flüssigkeit zur Behälterumformung sein. Ebenso ist denkbar, dass die Behandlungsstationen derart ausgebildet sind, dass der Vorformling in die Hohlform eingebracht, mit der Reckstange gestreckt und mittels des Produkts zum Kunststoffbehälter ausgeformt wird.

Der Ventilkopf kann dazu ausgebildet sein, beim Ausformen und/oder beim Abfüllen des Produkts mit der Mündung des Vorformlings bzw. des Kunststoffbehälters zu korrespondieren. Ferner kann eine Verfahreinheit dazu vorgesehen sein, nach dem Einbringen des Vorformlings die Hohlform mit dem Ventilkopf zu verschließen. Ferner kann der Ventilkopf Ventile, Leitungen, Düsen, Weichen und dergleichen umfassen, um das Formfluid, ein Gas und/oder das Produkt in den Vorformling und/oder den Kunststoffbehälter ein- oder auszuführen. Darüber hinaus kann der Ventilkopf zum Absaugen des Formfluids und/oder des Gases ausgebildet sein. Insbesondere kann der Ventilkopf dazu vorgesehen sein, einen Unter- und/oder Überdruck in den Vorformling bzw. den Kunststoffbehälter einzubringen. Ferner kann der Ventilkopf einen Kompressor umfassen oder mit diesem verbunden sein, um einen Druck auf das Formfluid und/oder das Gas aufzubringen. Der Kompressor kann beispielsweise ein Zylinder mit einem Kolben oder eine Pumpe umfassen. Darüber hinaus kann der Ventilkopf mit einer Vakuumpumpe verbunden sein. Die Ventile können dazu vorgesehen sein, den Fluss des Formfluids, des Produkts und/oder des Gases zu regulieren, freizugeben und/oder zu sperren.

Die Reckstange kann dazu vorgesehen sein, den Vorformling in einem erwärmten Zustand in der Hohlform zu strecken. Das Füllorgan kann wenigstens teilweise in der Reckstange integriert sein. Die Reckstange kann mit einer Längsverstellung oder über eine Kurvensteuerung entlang der Längsachse des Vorformlings verfahrbar sein.

Messeinrichtung kann hier bedeuten, dass die tatsächlich abgefüllte Produktmenge durch ein Messinstrument gemessen wird. Die Messeinrichtung kann derart ausgebildet sein, dass sie ein Signal abgibt, das der aktuell abgefüllten Produktmenge entspricht. Zusätzlich oder alternativ kann die Messeinrichtung dazu ausgebildet sein, bei einem Soll-Füllstand ein Signal abzugeben. Das Signal kann ein elektrisches Signal, beispielsweise ein digitales Signal auf einem Datenbus oder ein zur abgefüllten Produktmenge proportionaler analoger Spannungswert sein.

Die Messeinrichtung kann mit einer Maschinensteuerung verbunden sein, die das Signal von der Messeinrichtung erfasst und das Füllorgan steuert. Die Maschinensteuerung kann einen Regelkreis umfassen, der dazu ausgebildet ist, das Füllorgan auf Basis des Signals der Messeinrichtung zu regeln.

Die Messeinrichtung kann in der Hohlform, einer Produktzuleitung, dem Ventilkopf, der Reckstange und/oder dem Füllorgan integriert sein. Die abgefüllte Produktmenge kann ein Volumen, eine Masse und/oder ein Gewicht des in den Behälter abgefüllten Produkts sein. Das Volumen und die Masse können mit an sich bekannten Mitteln über die Dichte des Produkts ineinander umgerechnet werden. Ebenso kann die Masse und das Gewicht durch die Erdbeschleunigung von typischerweise 9,81 N/kg ineinander umgerechnet werden.

Die Messeinrichtung kann eine Positionserfassungseinrichtung zur Ermittlung der Reckstangenlängsposition gegenüber dem Kunststoffbehälter umfassen. Dadurch kann der Flüssigkeitsspiegel im Behälter besonders einfach und genau ermittelt werden. Die Positionserfassungseinrichtung kann ein optischer oder magnetischer Encoder sein, mit dem die Reckstangenlängsposition innerhalb eines Bewegungsbereichs kontinuierlich erfassbar ist. Ebenso kann die Positionserfassungseinrichtung dazu ausgebildet sein, eine einzelne oder mehrere diskrete Längspositionen der Reckstange zu erfassen. Beispielswese kann die Positionserfassungseinrichtung ein Reed-Kontakt oder ein Hall-Element zur Erfassung eines Magneten an der Reckstange sein.

Die Reckstange kann mit einem Rückgasrohr ausgebildet sein. Dadurch kann besonders einfach der Flüssigkeitsspiegel mit der Reckstange erfasst werden. Das Rückgasrohr dient üblicherweise zum Entweichen des beim Füllen des Behälters verdrängten Gasvolumens. Schlägt nun der Flüssigkeitsspiegel am Rückgasrohr an, so kann kein Gas mehr entweichen und der Füllvorgang stoppt. Dadurch ist es möglich, über die Messung und Einstellung der Reckstangenlängsposition den Flüssigkeitsspiegel des befüllten Behälters zu bestimmen.

Die Messeinrichtung kann eine an der Reckstange ausgebildete Sonde zur Erfassung der Füllstandshöhe im Kunststoffbehälter umfassen. Dadurch, dass die Sonde den Flüssigkeitsspiegel im Behälter direkt erfasst, kann dieser besonders genau ermittelt werden. Zudem ist es mit mehreren längs der Reckstange ausgebildeten Sonden möglich, den Füllverlauf des Kunststoffbehälters zu erfassen. Dadurch kann das Füllorgan noch genauer geregelt werden. Die Sonde kann beispielsweise ein Leitfähigkeitssensor sein. Da das Gas über dem Flüssigkeitsspiegel im Behälter üblicherweise eine geringere Leitfähigkeit als das Produkt aufweist, kann damit beim Abfüllen erfasst werden, zu welchem Zeitpunkt der Flüssigkeitsspiegel die Sonde überstreicht.

Die Messeinrichtung umfasst eine Wägezelle. Dadurch kann das Gewicht des im Kunststoffbehälter eingeschlossenen Produkts besonders genau erfasst werden. Die Wägezelle kann einen Kraftaufnehmer und optional Federelemente umfassen.

Die Wägezelle kann zur Gewichtsbestimmung der Hohlform und/oder des darin aufgenommenen Kunststoffbehälters und des abgefüllten Produkts ausgebildet sein. Dadurch, dass das Gewicht der Hohlform und des Kunststoffbehälters üblicherweise a priori bekannt ist, kann dieses vom gemessenen Gewicht subtrahiert werden. Folglich dient die Hohlform mit dem Kunststoffbehälter als Wiegekammer für das abgefüllte Produkt. Dadurch benötigt die Vorrichtung keine gesonderte Vorkammer zum Wiegen des Produkts und kann dadurch einfacher aufgebaut werden. Die Wägezelle kann in der Hohlform integriert sein. Denkbar ist auch, dass ein Tragelement der Wägezelle am Behälter zum Wiegen angreift, wobei insbesondere die Hohlform den Behälter freigibt.

Die Wägezelle kann als Dehnungsmessstreifen oder als Piezokraftaufnehmer ausgebildet sein. Dadurch ist die Wägezelle besonders kostengünstig.

Die Messeinrichtung kann einen Produktstrommesser im Ventilkopf oder in einem Produktzulauf zum Ventilkopf umfassen. Dadurch kann die abgefüllte Produktmenge bereits vor dem Austritt aus dem Füllorgan bestimmt werden und ist damit unabhängig von einem Schwappen oder einer Flüssigkeitsbewegung im Behälter. Der Produktstrommesser kann einen Produktkanal und ein darin drehbar angeordnetes Flügelrad umfassen. Mit einem Geber kann die durch den Produktstrom hervorgerufene Drehbewegung des Flügelrads erfasst und darüber auf die abgefüllte Produktmenge geschlossen werden.

Die Messeinrichtung kann eine Einrichtung zur Erfassung einer Vordosagemenge in einer Dosierkammer umfassen. Dadurch kann die abzufüllende Produktmenge im Voraus noch genauer erfasst werden und ist beispielsweise unabhängig von den thermischen Vorgängen im Kunststoffbehälter. Die Dosierkammer kann einen Dosierzylinder mit einem darin bewegbar angeordneten Dosierkolben (ähnlich einer Spritze) umfassen. Denkbar ist auch, dass das Gewicht einer Dosierkammer mit der darin enthaltenen Vordosagemenge über eine Wägezelle erfasst wird. Alternativ ist denkbar, dass die Vordosagemenge mit einem Produktstrommesser erfasst wird. Die Erfassungseinrichtung kann eine Wägezelle, einen Produktstrommesser und/oder einen Geber zur Erfassung der Position des Dosierkolbens umfassen.

Die Dosierkammer kann am Ventilkopf ausgebildet sein. Dadurch befindet sich eine möglichst geringe, von der Messeinrichtung nicht erfasste Produktmenge in einer Leitung zwischen der Dosierkammer und dem Füllorgan. Dadurch arbeitet die Messeinrichtung noch genauer.

Weitere Merkmale und Vorteile der Erfindung werden nachfolgend anhand der in den Figuren dargestellten Ausführungsbeispiele näher erläutert. Dabei zeigt:
- Figur 1: ein Ausführungsbeispiel einer Formfüllmaschine mit mehreren Behandlungsstationen und einen vorgeordneten Ofen zur Erwärmung der Vorformling in einer Draufsicht;
- Figur 2: eine Behandlungsstation der in der Figur 1 dargestellten Formfüllmaschine in einer seitlichen Schnittansicht mit einem ersten Ausführungsbeispiel der Messeinrichtung als Positionserfassungssystem für die Reckstange;
- Figur 3: das Ausführungsbeispiel der Messeinrichtung aus der Figur 2 beim Bestimmen der abgefüllten Produktmenge mit einem Rückgasrohr in einer Seitenansicht;
- Figur 4: ein weiteres Ausführungsbeispiel der Messeinrichtung in einer Seitenansicht, wobei die Reckstange eine Sonde aufweist;
- Figur 5: die erfindungsgemäße Messeinrichtung mit einer Wägezelle in einer Seitenansicht;
- Figur 6: ein weiteres Ausführungsbeispiel der Messeinrichtung mit einem Produktstrommesser in einer Seitenansicht; und
- Figur 7: ein weiteres Ausführungsbeispiel der Messeinrichtung mit einer Vordosagekammer.

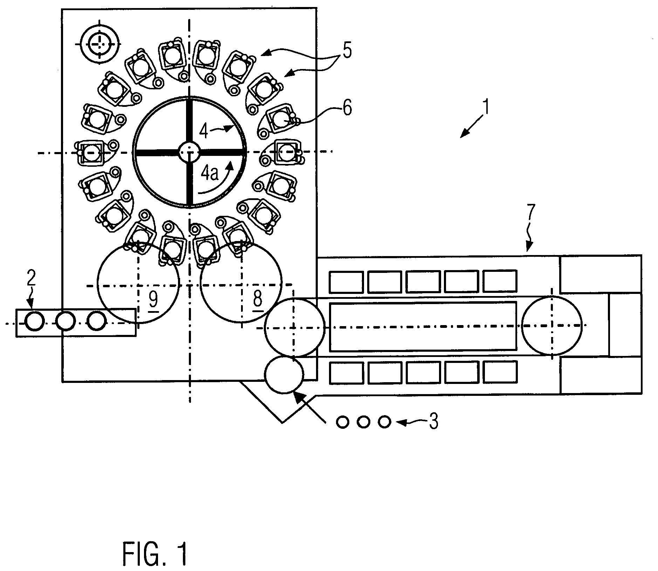

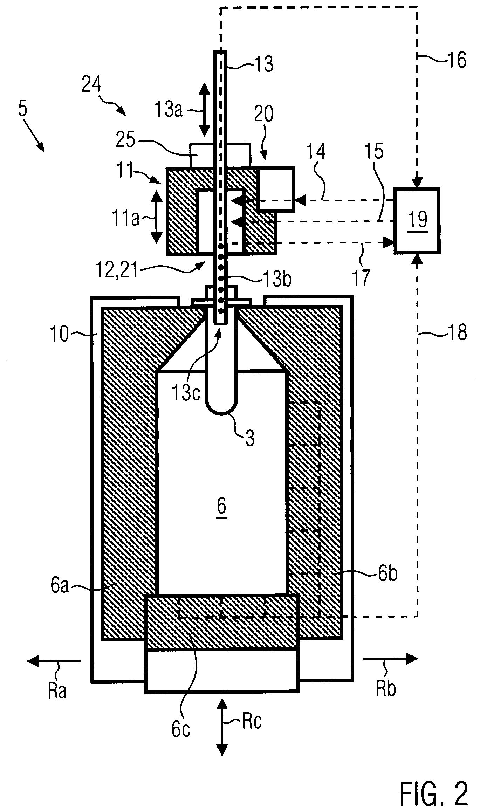

In der Figur 1 ist ein Ausführungsbeispiel einer Formfüllmaschine 1 mit einem vorgeschalteten Ofen 7 in einer Draufsicht dargestellt. Zu sehen sind die Vorformlinge 3, die zunächst den Ofen 7 durchlaufen und dadurch soweit erwärmt werden, dass sie mit der nachfolgenden Formfüllmaschine 1 in die gewünschte Behälterform umgeformt werden können. Anschließend werden die erwärmten Vorformlinge mit dem Einlaufstern 8 an die Behandlungsstationen 5 übergeben, die nachfolgend genauer anhand der Figur 2 beschrieben werden. Beim Umlauf des Karussells 4 entlang der Richtung 4a werden die Vorformlinge 3 in den Behandlungsstationen 5 gestreckt, in die gewünschte Behälterform umgeformt und mit dem Produkt befüllt. Dabei verbleiben die Vorformlinge 3 bzw. die ausgeformten Behälter 2 immer in den Hohlformen 6. Nach dem Befüllen werden die Behälter 2 über den Auslaufstern 9 weiteren Behandlungsschritten zugeführt. Beispielsweise kann der Formfüllmaschine 1 ein Verschließer nach- oder zugeordnet sein, mit dem die Kunststoffbehälter 2 verschlossen werden. Die Kunststoffbehälter 2 sind hier PET-Behälter, können jedoch aus jedem anderen geeigneten Kunststoff sein.

In der Figur 2 ist eine Behandlungsstation 5 der in der Figur 1 dargestellten Formfüllmaschine 1 in einer seitlichen Schnittansicht gezeigt. Zu sehen ist, dass der Vorformling 3 bereits in die Hohlform 6 eingebracht ist. Im Bereich der Mündung weist der Vorformling 3 einen Kragen und ein hier nicht genauer dargestelltes Gewinde auf, das später zum Aufschrauben eines Verschlusses dient. Die einzelnen Formteile 6a-6c der Hohlform 6 sind über den mehrteiligen Formträger 10 in die Richtungen Ra-Rc verfahrbar, um den fertig ausgeformten Behälter nach dem Befüllen freizugeben. Denkbar ist auch, dass der Vorformling 3 entweder von oben in die Öffnung der Hohlform 6 gesteckt oder durch ein Öffnen und Schließen der Formteile 6a-6c in die Hohlform 6 eingebracht wird.

Zu sehen ist ferner der Ventilkopf 11 mit der Reckstange 13, der mittels einer hier nicht dargestellten Verfahreinheit oder Kurvensteuerung in der Richtung 11a verfahrbar ist, um ihn auf die Hohlform 6 abzusenken und diese damit gegenüber der Umgebung beim Umformen und Befüllen abzuschließen. Denkbar ist, dass der Ventilkopf 11 Dichtungselemente zum Vorformling 3 und/oder zur Hohlform 6 aufweist.

Im Ventilkopf 11 ist die Reckstange 13 über eine hier ebenfalls nicht dargestellte Verfahreinheit oder Kurvensteuerung entlang der Richtung 13a verfahrbar, so dass der erwärmte Vorformling 3 in üblicher Weise gestreckt werden kann.

Ferner ist am Ventilkopf 11 die Fluiddüse 12 ausgebildet, mittels der ein Formfluid in den gestreckten Vorformling 3 eingepresst werden kann. Das Formfluid ist hier Wasser oder eine zur Umformung geeignete Flüssigkeit und wird über die Zuleitung 14 und den Kompressor 20 mit einem geeigneten Druck bereitgestellt. Dieser ist beispielsweise als Druckzylinder ausgeführt. Durch das Formfluid wird der gestreckte Vorformling 3 besonders schnell an die formgebenden Innenflächen der Hohlform 6 gepresst und so zum fertigen Kunststoffbehälter ausgeformt. Dabei nimmt das Formfluid gleichzeitig die Wärme des Vorformlings 3 auf, so dass der Behälter nach dem Umformen möglichst rasch seine Formstabilität erhält.

Nach dem Ausformen des Kunststoffbehälters wird das Formfluid über die Öffnungen 13b und einen Kanal in der Reckstange 13 in die hydraulische Absaugleitung 16 abgesaugt.

Beim Abfüllen wird das Produkt über die Produktzuleitung 15 und einen Kanal im Füllorgan 21 in den ausgeformten Kunststoffbehälter abgefüllt. Beispielsweise ist das Füllorgan 21 als ringförmige Düse um die Reckstange 13 ausgebildet. Beim Befüllen wird der Kunststoffbehälter über die pneumatischen Absaugleitungen 17, 18 am Ventilkopf 11 bzw. an der Hohlform 6 in einem Druckgleichgewicht zwischen der Innen- und Außenseite gehalten, so dass der Kunststoffbehälter nicht kollabiert. Vorteilhaft ist dabei eine Befüllung unter Unterdruck im Kunststoffbehälter.

Alternativ dazu ist denkbar, dass die Behandlungsstation 5 derart ausgebildet ist, dass das Produkt als Formfluid zum Ausformen des Kunststoffbehälters eingesetzt wird. Dadurch muss das Formfluid dann nicht aus dem fertig ausgeformten Kunststoffbehälter wieder abgesaugt und durch das Produkt ersetzt werden.

Ferner ist der Medienverteiler 19 zu sehen, über den alle Behandlungsstationen 5 der Formfüllmaschine 1 mit dem Formfluid, dem Produkt und einem Unterdruck versorgt werden.

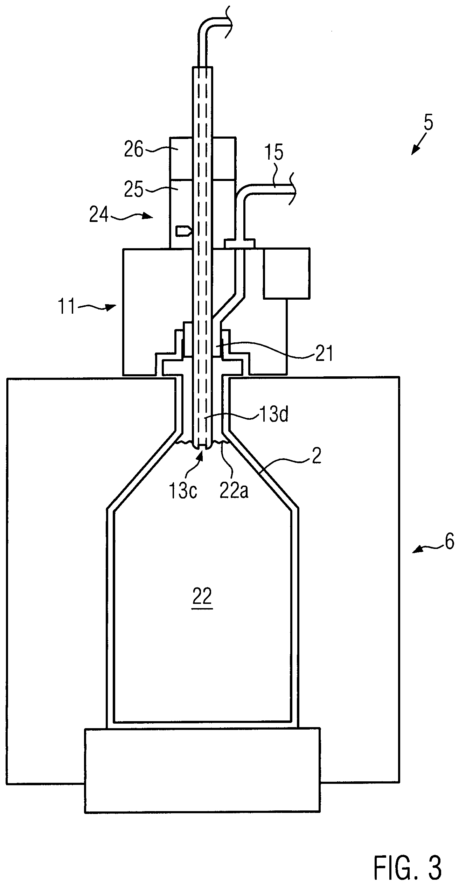

Die Figuren 2 und 3 zeigen die Behandlungsstation 5 in einer Seitenansicht mit einem ersten Ausführungsbeispiel der Messeinrichtung 24, bei dem mittels einer Positionserfassungseinrichtung 25 die Längsposition der Reckstange 13 entlang der Richtung 13a erfasst wird. Ferner weist die Reckstange 13 das Rückgasrohr 13c auf, über die beim Abfüllen des Produkts 22 Gas aus dem Kunststoffbehälter 2 in den Kanal 13d der Reckstange entweichen kann.

Ferner weist der Ventilkopf 11 die Verfahreinheit 26 zur Höhenverstellung der Reckstange 13 auf. Dadurch kann die Reckstange 13 zum Strecken des Vorformlings 3 und zur Bestimmung der abgefüllten Produktmenge wie folgt eingesetzt werden:
Vor dem Abfüllen wird die Reckstange 13 so verfahren, bis das untere Ende des Rückgasrohrs 13c in der Höhe des gewünschten Flüssigkeitsspiegel 22a liegt. Die Höhe der Reckstange 13 und damit des Rückgasrohrs 13c wird mittels der Positionserfassungseinrichtung 25 erfasst, die als Lineargeber ausgebildet ist. Dadurch ist die Position des Rückgasrohrs 13c gegenüber dem Behälter 2 genau bekannt.

Beim anschließenden Abfüllen wird das Produkt 22 über die Zuleitung 15 und das Füllorgan 21 in den Kunststoffbehälter 2 eingefüllt. Dabei wird das im Behälter 2 befindliche Gas verdrängt und entweicht über das Rückgasrohr 13c und den Kanal 13d. Schlägt nun der Flüssigkeitsspiegel 22a am Rückgasrohr 13c an, so kann das verbleibende Kopfvolumen des Gases nicht mehr entweichen und es ergibt sich daraus die gewünschte Abfüllmenge des Produkts.

Folglich kann über eine Messeinrichtung 24 für die Längsposition der Reckstange 13 die abgefüllte Produktmenge besonders einfach bestimmt werden.

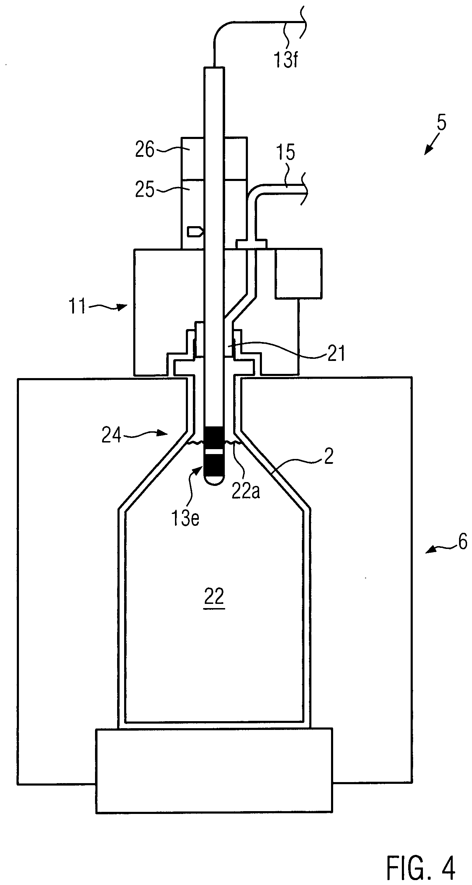

In der Figur 4 ist ein weiteres Ausführungsbeispiel der Messeinrichtung 24 in einer Seitenansicht gezeigt. Dieses unterscheidet sich von dem in den Figuren 2 und 3 dargestellten Ausführungsbeispiel lediglich dadurch, dass der Flüssigkeitsspiegel 22a nicht über das Rückgasrohr sondern durch eine Sonde 13e an der Reckstange 13 erfasst wird. Ansonsten kann die Reckstange 13, wie zuvor beschrieben, mit der Verfahreinheit 26 höhenverstellt werden und die Längsposition mit der Positionserfassungseinrichtung 25 bestimmt werden.

Die Sonde 13e ist hier als Leitfähigkeitssonde ausgebildet und umfasst zwei durch einen Isolierspalt getrennte und übereinander angeordnete Elektroden. Die Sonde 13e ist über das Kabel 13f mit einer geeigneten Auswerteelektronik und der Maschinensteuerung verbunden (beides hier nicht dargestellt). Befindet sich die Sonde 13e im Gas über dem Flüssigkeitsspiegel 22a, so ist die gemessene Leitfähigkeit äußerst gering. Überschreitet der Flüssigkeitsspiegel 22a dagegen den Isolierspalt nach oben, so kommen beide Elektroden mit dem Produkt 22 in Kontakt. Die Leitfähigkeit steigt nun im Moment des Kontakts mit dem Produkt und die Höhe des Flüssigkeitsspiegels 22a ist bestimmbar.

Die in der Fig. 4 dargestellte Messeinrichtung kann entweder entsprechend dem vorangegangenen Ausführungsbeispiel (Fig. 2 und 3) eingesetzt werden, wobei die Position der Sonde 13e vor dem Abfüllen so eingestellt wird, dass sie auf der gewünschten Soll-Höhe des Flüssigkeitsspiegels 22a des fertig abgefüllten Produkts 22 liegt.

Ebenso ist denkbar, dass die Reckstange 13 mit der Verfahreinheit 26 beim Abfüllen kontinuierlich oder in Schritten nach oben verfahren wird und immer wieder der Flüssigkeitsspiegel 22a über die Positionserfassungseinrichtung 25 und die Sonde 13e bestimmt wird. Dadurch kann das Füllorgan 21 noch genauer geregelt werden.

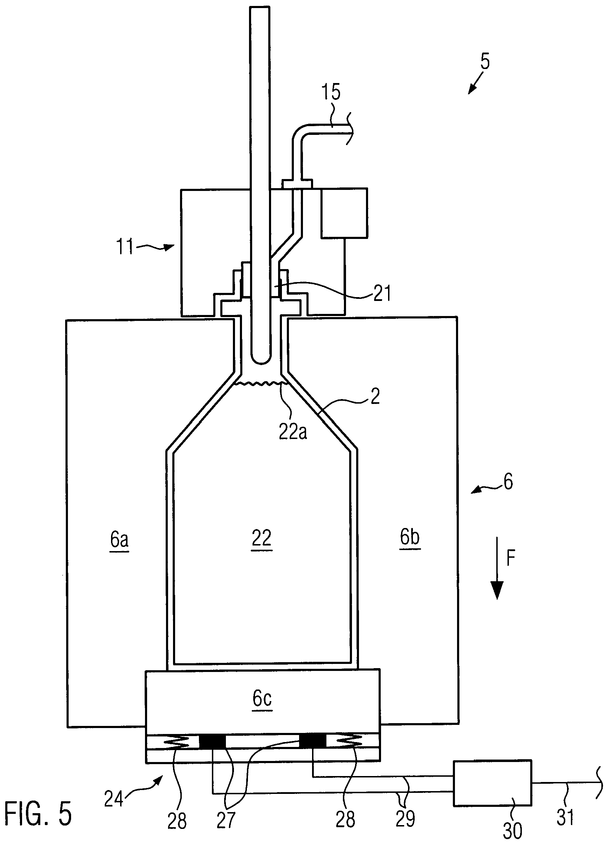

In der Figur 5 ist die erfindungsgemäße Messeinrichtung 24 in einer Seitenansicht zu sehen. Die Behandlungsstation 5 unterscheidet sich vom Ausführungsbeispiel in der Fig. 2 dadurch, dass die Messeinrichtung 24 nicht die Reckstangenposition erfasst sondern mit Wägezellen 27 ausgebildet ist, die das Gewicht der Hohlform 6, des Kunststoffbehälters 2 und des darin enthaltenen Produkts 22 erfassen.

Zu sehen ist, dass die Wägezellen 27 und zusätzliche Federn 28 in das Bodenteil 6c der Hohlform integriert sind und so eine Kraft auf die Anordnung in der Richtung F erfassen können. Die Wägezellen 27 sind hier als an sich bekannte Piezokraftaufnehmer ausgeführt. Diese erfassen eine Kraft auf den Piezokristall und geben über die Leitungen 29 eine dazu proportionale Ladungsmenge an den Ladungsverstärker 30 ab. Der Ladungsverstärker 30 wandelt die Ladungsmenge in ein entsprechendes Kraftsignal um und gibt dies über das Bussystem 31 an die Maschinensteuerung ab.

Die Messeinrichtung 24 in der Figur 5 wird wie folgt eingesetzt:
Nach dem Einbringen des Vorformlings 3 in die Hohlform 6 und dem Schließen des Ventilkopfs 11 wird das Gewicht der Gesamtanordnung mit den Wägezellen 27 als Ausgangsgewicht erfasst und an die Maschinensteuerung weitergeleitet.

Beim Befüllen wird kontinuierlich die Änderung zum Ausgangsgewicht erfasst und ebenfalls an die Maschinensteuerung weitergeleitet. Die abgefüllte Menge des Produkts 22 entspricht einer vorherbestimmten Gewichtsänderung der Gesamtanordnung. Wird diese überschritten, so kann das Füllorgan 21 gestoppt werden und der Behälter ist mit der gewünschten Füllmenge befüllt.

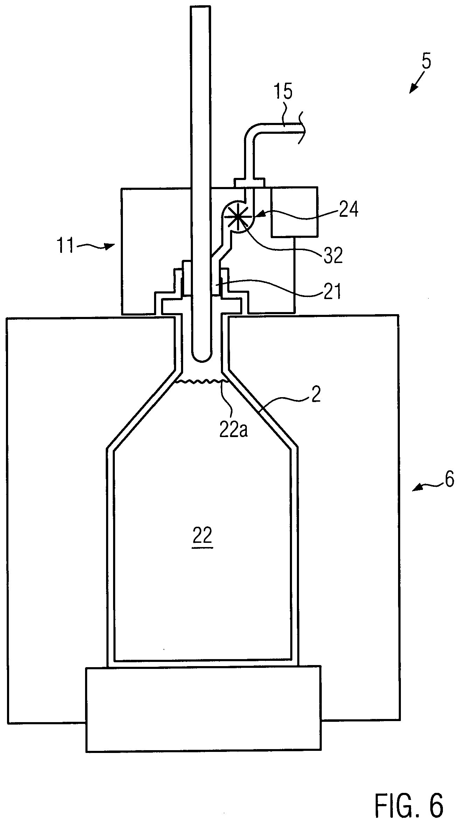

In der Figur 6 ist ein weiteres Ausführungsbeispiel der Messeinrichtung 24 in einer Seitenansicht gezeigt. Die Behandlungsstation 5 unterscheidet sich vom Ausführungsbeispiel in der Fig. 2 dadurch, dass die Messeinrichtung 24 nicht die Reckstangenposition erfasst sondern als Produktstrommesser 32 im Ventilkopf 11 ausgebildet ist.

Zu sehen ist, dass der Produktstrom aus der Zuleitung 15 über ein Flügelrad des Produktstrommessers 32 geführt wird. Dadurch wird beim Befüllen eine Drehbewegung erzeugt, die mit einem hier nicht näher dargestellten Messwertgeber erfasst und als Signal an die Maschinensteuerung abgegeben wird. Anschließend fließt das Produkt weiter über das Füllorgan 21 in den Behälter 2.

Die Messeinrichtung 24 in der Figur 6 wird wie folgt eingesetzt:
Ein hier nicht dargestelltes Ventil im Füllorgan 21 wird beim Befüllen so lange geöffnet, bis der Produktstrommesser 32 den gewünschten Volumenstrom in den Behälter 2 erfasst hat. Dabei dreht sich das Flügelrad eine bestimmte Anzahl von Umdrehungen, bis die gewünschte Durchflussmenge erreicht ist. Anschließend wird das Ventil des Füllorgans 21 wieder geschlossen. Der Flüssigkeitsspiegel 22a des Produkts 22 entspricht dann im Behälter 2 der gewünschten Höhe.

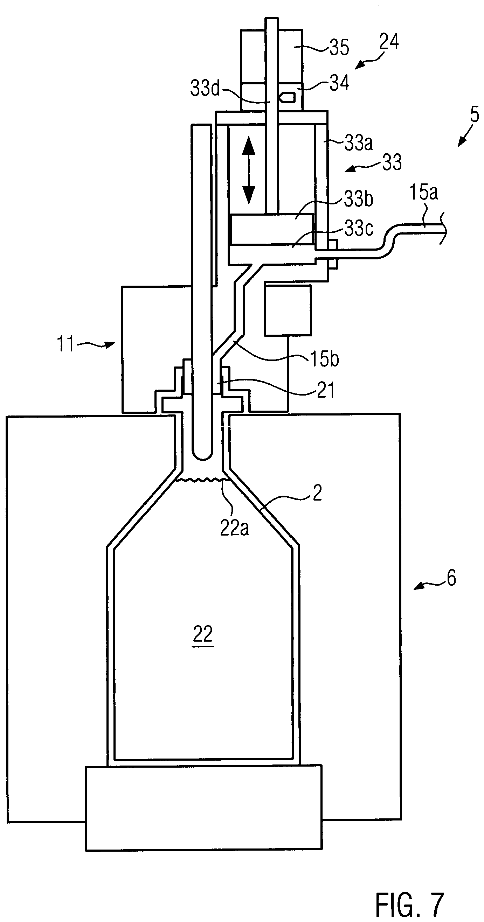

In der Figur 7 ist ein weiteres Ausführungsbeispiel der Messeinrichtung 24 in einer Seitenansicht gezeigt. Die Behandlungsstation 5 unterscheidet sich vom Ausführungsbeispiel in der Fig. 2 dadurch, dass die Messeinrichtung 24 nicht die Reckstangenposition erfasst sondern als Erfassungseinrichtung 34 für die Vordosagemenge in der Dosierkammer 33c ausgebildet ist.

Zu sehen ist, dass am Ventilkopf 11 die Dosiereinheit 33 mit der Dosierkammer 33c angeordnet ist. Das Volumen der Dosierkammer 33c ist über den Dosierzylinder 33a und den Dosierkolben 33b begrenzt. Durch Verfahren des Dosierkolbens 33b mit der Verfahreinheit 35 kann das Produkt aus der Zuleitung 15a angesaugt und anschließend durch die Leitung 15b an das Füllorgan 21 abgegeben werden. Um dabei einen Rückwärtsfluss des Produkts zu verhindern, sind in den Leitungen 15a und 15b entsprechende Rückflussverhinderer angeordnet. Denkbar ist hier, dass die Verfahreinheit 35 ein Direktantrieb oder eine Kurvensteuerung ist.

Die Position des Dosierkolbens 33b gegenüber dem Dosierzylinder 33a kann mit der Erfassungseinrichtung 34 bestimmt werden, die als Lineargeber an der Kolbenstange 33d ausgebildet ist. Hiermit kann entweder kontinuierlich oder an den Endstellungen des Dosiervorgangs die Kolbenposition genau bestimmt werden.

Die Vordosagemenge lässt sich aus den Endstellungen beim Verfahren des Dosierkolbens 33b dadurch bestimmen, dass die Höhendifferenz der Endstellungen mit der Querschnittsfläche des Dosierzylinders 33a multipliziert wird.

Die Messeinrichtung 24 in der Figur 7 wird wie folgt eingesetzt:
Zunächst befindet sich der Dosierkolben 33b in der unteren Endstellung. Diese Position wird mit der Erfassungseinrichtung 34 erfasst und an eine Maschinensteuerung als Signal weitergegeben. Anschließend wird der Dosierkolben 33b so weit nach oben verfahren, bis mit der Erfassungseinrichtung 34 die obere Endstellung erfasst wird. Aus der Differenz zwischen beiden Endstellungen multipliziert mit der Querschnittsfläche des Dosierzylinders 33a ergibt sich das Vordosagevolumen in der Dosierkammer 33c. Anschließend wird der Dosierkolben 33b wieder in die untere Endstellung verfahren und das Produkt 22 über das Füllorgan 21 in den Behälter 2 abgegeben. Nach dem Dosierzyklus ist dann der Behälter 2 bis zum gewünschten Flüssigkeitsspiegel 22a mit dem Vordosagevolumen gefüllt. Denkbar ist auch, dass der Dosierzyklus für das Befüllen eines Behälters 2 mehrmals durchlaufen wird und die Vordosagevolumina dann entsprechend zu einem Gesamtvolumen aufaddiert werden.

Es versteht sich, dass in den zuvor beschriebenen Ausführungsbeispielen genannte Merkmale nicht auf diese speziellen Kombinationen beschränkt und in beliebigen anderen Kombinationen im Rahmen der Ansprüche möglich sind.

## Patentansprüche

1. Formfüllmaschine (1) zum Ausformen eines Kunststoffbehälters (2) aus einem Vorformling (3) in einer Hohlform (6) und zur Produktbefüllung des Kunststoffbehälters (2) in der Hohlform (6),
mit einem Ventilkopf (11), der eine Reckstange (13) zum Strecken des Vorformlings und ein Füllorgan (21) zum Abfüllen eines Produkts (22) in den Kunststoffbehälter (2) in der Hohlform (6) umfasst, und
mit eine Messeinrichtung (24) zur Bestimmung der in den Kunststoffbehälter (2) abgefüllten Produktmenge,
**dadurch gekennzeichnet, dass**
die Messeinrichtung (24) eine Wägezelle (27) umfasst.

2. Formfüllmaschine (1) nach Anspruch 1, wobei die Messeinrichtung (24) eine Positionserfassungseinrichtung (25) zur Ermittlung der Reckstangenlängsposition gegenüber dem Kunststoffbehälter (2) umfasst.

3. Formfüllmaschine (1) nach Anspruch 1 oder 2, wobei die Reckstange (13) mit einem Rückgasrohr (13c) ausgebildet ist.

4. Formfüllmaschine (1) nach einem der vorangegangenen Ansprüche, wobei die Messeinrichtung (24) eine an der Reckstange (13) ausgebildete Sonde (13e) zur Erfassung der Füllstandshöhe im Kunststoffbehälter (2) umfasst.

5. Formfüllmaschine (1) nach Anspruch 4, wobei die Sonde als Leitfähigkeitssonde ausgebildet ist.

6. Formfüllmaschine (1) nach einem der vorangegangenen Ansprüche, wobei die Wägezelle (27) zur Gewichtsbestimmung der Hohlform (6), des darin aufgenommenen Kunststoffbehälters (2) und/oder des abgefüllten Produkts (22) ausgebildet ist.

7. Formfüllmaschine (1) nacheinem der vorangegangenen Ansprüche, wobei die Wägezelle (27) als Dehnungsmessstreifen oder als Piezokraftaufnehmer ausgebildet ist.

8. Formfüllmaschine (1) nach einem der vorangegangenen Ansprüche, wobei die Messeinrichtung (24) einen Produktstrommesser (32) im Ventilkopf (11) oder in einem Produktzulauf zum Ventilkopf umfasst.

9. Formfüllmaschine (1) nach einem der vorangegangenen Ansprüche, wobei die Messeinrichtung (24) eine Einrichtung zur Erfassung einer Vordosagemenge (34) in einer Dosierkammer (33c) umfasst.

10. Formfüllmaschine (1) nach Anspruch 9, wobei die Erfassungseinrichtung (34) eine Wägezelle, einen Produktstrommesser und/oder einen Geber zur Erfassung der Position eines Dosierkolbens umfasst.

11. Formfüllmaschine (1) nach Anspruch 9 oder 10, wobei die Dosierkammer (33c) am Ventilkopf (11) ausgebildet ist.

## Claims

1. Mold filling machine (1) for forming a plastic container (2) from a preform (3) in a hollow mold (6) and for the product filling of the plastic container (2) in the hollow mold (6),
comprising a valve head (11) which includes a stretching rod (13) for stretching the preform and a filling device (21) for filling a product (22) into the plastic container (2) in the hollow mold (6), and
comprising a measuring device (24) for determining the product quantity filled into the plastic container (2),
**characterized in that**
the measuring device (24) comprises a load cell (27).

2. Mold filling machine (1) according to claim 1, wherein the measuring device (24) comprises a position detection device (25) for determining the stretching-rod length position relative to the plastic container (2).

3. Mold filling machine (1) according to claim 1 or 2, wherein the stretching rod (13) is formed with a return gas pipe (13c).

4. Mold filling machine (1) according to any one of the preceding claims, wherein the measuring device (24) comprises a probe (13e) formed on the stretching rod (13) for detecting the fill level in the plastic container (2).

5. Mold filling machine (1) according to claim 4, wherein the probe is configured as a conductivity probe.

6. Mold filling machine (1) according to any one of the preceding claims, wherein the load cell (27) is configured for determining the weight of the hollow mold (6), the plastic container (2) received therein and/or the filled product (22).

7. Mold filling machine (1) according to any one of the preceding claims, wherein the load cell (27) is designed as a strain gage or as a piezoelectric force transducer.

8. Mold filling machine (1) according to any one of the preceding claims, wherein the measuring device (24) comprises a product-stream measuring device (32) in the valve head (11) or in a product feed to the valve head.

9. Mold filling machine (1) according to any one of the preceding claims, wherein the measuring device (24) is a device for detecting a pre-dosage amount (34) in a dosage chamber (33c).

10. Mold filling machine (1) according to claim 9, wherein the detection device (34) comprises a load cell, a product-stream measuring device and/or an encoder for detecting the position of a dosing piston.

11. Mold filling machine (1) according to claim 9 or 10, wherein the dosage chamber (33c) is formed on the valve head (11).

## Revendications

1. Machine de formage et de remplissage (1) pour assurer le moulage par formage d'un contenant (2) en matière plastique, à partir d'une préforme (3) dans un moule creux (6), et pour assurer le remplissage en produit du contenant (2) en matière plastique, dans le moule creux (6),
comprenant une tête de vanne (11), qui comprend une tige d'étirage (13) pour étirer la préforme, et un organe de remplissage (21) pour assurer le remplissage du contenant (2) en matière plastique avec un produit (22), dans le moule creux (6), et
comprenant un dispositif de mesure (24) pour déterminer la quantité de produit ayant été introduite dans le contenant (2) en matière plastique lors du remplissage,
**caractérisée en ce que** le dispositif de mesure (24) comprend une cellule de pesée (27).

2. Machine de formage et de remplissage (1) selon la revendication 1, dans laquelle le dispositif de mesure (24) comprend un dispositif de relevé de position (25) pour déterminer la position longitudinale de la tige d'étirage par rapport au contenant (2) en matière plastique.

3. Machine de formage et de remplissage (1) selon la revendication 1 ou la revendication 2, dans laquelle la tige d'étirage (13) est réalisée avec un tube d'échappement de gaz de refoulement (13c).

4. Machine de formage et de remplissage (1) selon l'une des revendications précédentes, dans laquelle le dispositif de mesure (24) comprend une sonde (13e) formée sur la tige d'étirage (13) et destinée à relever la hauteur du niveau de remplissage dans le contenant (2) en matière plastique.

5. Machine de formage et de remplissage (1) selon la revendication 4, dans laquelle la sonde se présente sous la forme d'une sonde de conductivité.

6. Machine de formage et de remplissage (1) selon l'une des revendications précédentes, dans laquelle la cellule de pesée (27) est conçue pour déterminer le poids du moule creux (6), du contenant (2) en matière plastique, qui y est logé, et/ou du produit (22) ayant été introduit lors du remplissage.

7. Machine de formage et de remplissage (1) selon l'une des revendications précédentes, dans laquelle la cellule de pesée (27) est réalisée sous forme de jauge de contrainte ou de capteur piézoélectrique.

8. Machine de formage et de remplissage (1) selon l'une des revendications précédentes, dans laquelle le dispositif de mesure (24) comprend un dispositif de mesure de débit de produit (32) dans la tête de vanne (11) ou dans une alimentation en produit de la tête de vanne.

9. Machine de formage et de remplissage (1) selon l'une des revendications précédentes, dans laquelle le dispositif de mesure (24) comprend un dispositif destiné à relever une quantité de pré-dosage (34) dans une chambre de dosage (33c).

10. Machine de formage et de remplissage (1) selon la revendication 9, dans laquelle le dispositif de relevé (34) comprend une cellule de pesée, un dispositif de mesure de débit de produit et/ou un capteur pour relever la position d'un piston de dosage.

11. Machine de formage et de remplissage (1) selon la revendication 9 ou la revendication 10, dans laquelle la chambre de dosage (33c) est formée sur la tête de vanne (11).
